# EUROPEAN PATENT SPECIFICATION

(11) **EP 0 289 588 B1**
(45) Date of publication and mention of the grant of the patent: **04.01.1995**
(21) Application number: 88900271.3
(22) Date of filing: 01.10.1987
(51) Int. Cl.: B60L 13/04, E01B 25/06, E01B 25/12

(54) **TRANSPORT SYSTEM FOR COMPUTER INTEGRATED MANUFACTURING/STORAGE AND DRIVE COMPONENT THEREFOR**
FÖRDERSYSTEM FÜR RECHNERINTEGRIERTE HERSTELLUNG/LAGERUNG UND ANTRIEBSKOMPONENTE DAZU
SYSTEME DE TRANSPORT POUR FABRICATION/STOCKAGE COMMANDE PAR ORDINATEUR ET ELEMENT D'ENRAINEMENT POUR CE SYSTEME

(30) Priority: 03.10.1986 US 915147
(43) Date of publication of application: 09.11.1988
(73) Proprietor: MIDDLESEX GENERAL INDUSTRIES, INC., Woburn, MA 01801 (US)
(72) Inventor: HORN, George, W., Woburn, MA 02109 (US)
(74) Representative: Jones, Ian
(86) International application number: US8702526
(87) International publication number: WO8802321

(56) References cited:
- DE-A- 3 304 090
- US-A- 3 807 312
- US-A- 3 845 718
- US-A- 3 854 412
- US-A- 3 927 620
- US-A- 4 055 123
- US-A- 4 131 811
- US-A- 4 356 772
- US-A- 4 387 935
- US-A- 4 416 202
- US-A- 4 530 287

## Description

### BACKGROUND OF THE INVENTION

The present invention relates to materials transport, particularly in connection with programmable unit operations executable under computer control for manufacturing, assembly, warehouse storage and related assembly/diversion of parts and other like processing and equipment. The invention provides a system of conveying parts asynchronous of a weight range of significant weight and/or applied force, typically on the order of ten pounds and ranging up to and over one hundred pounds including weight of parts conveyed, tare weight of trays, pallets and other movable holders and force applied by processing implements, such as hand and machine tools at stations along the path(s) of transport of the parts. The invention is also characterized by realization of a practical modularity of construction and a high degree of freedom in design of plant layout. The invention further includes reduction of shedding and dust generation by the transport system per se to the point of suitability for clean room operations.

The growth of computer integrated operations in factory, storage and other like environments has challenged the state of the art of materials transport.

It is an object of the art and of this invention to achieve precision in transport systems as the core of a modular system affording effective use in the range of weights, momentum, bulk and hardness of parts typically handled.

It is a further such object to provide appropriate degrees of design freedom in usage of such a system in connection with plant layout and in connection with differing transport schedules of different parts simultaneously handled by the system.

It is a further such object to minimize frictional losses and to minimize friction generated losses of power, efficiency and timing control in transport tasks of the class involved here.

It is a further such object to realize low capital costs in connection with transport tasks of the class involved here - avoiding costly, custom designed robotics installation with attendant complex sensors and finely tuned and balanced drives.

The foregoing objects are realised through the present invention. According to the invention there is provided a transport system for programmed transport for machining, assembly and the like of workpieces or the like, comprising, in combination,
(a) means (12) defining at least one transport path for movement of the parts and including means (S) to selectively stop motion of the parts wherein the transport path comprises two spaced opposing rails constructed and arranged for even distribution of workpiece weight to the two rails,
(b) support means for supporting workpiece parts (WP) in said path and constructed and arranged for movement along said path
(c) drive means (24) for moving said support means and continuously applying driving torque thereto whether said support means are moving or stopped by said means (S), wherein the torque application is made during stops, characterised in that said drive means comprises
   non-slipping, non-shedding drive means defining a motive power section and a support section and a hysteresis magnetic coupling therebetween, and idler means mounted on both rails for guiding said support means.

In a preferred embodiment, selective stopping of certain pallets without mechanical friction slippage is accommodated also without particulate generation from such slippage.

The system assumes possible utilization with external drive enhancing or drive limited means (e.g., stops).

According to a referred aspect of the invention there is provided a system for programmed transport of workpieces or the like according to the first aspect and wherein, said means (12) comprise a plurality of pre-formed distinct length sections having a substantially common width to all such sections and further comprise at least one corner section of square form based on said common width, wherein preferably said drive means (24) comprise a plurality of wheel assemblies, each having a first powered section and a second section magnetically coupled to the first section.

The drive means, which are usable in the foregoing transport system of the invention and in other like applications, may comprise repeated use of magnetic hysteresis couplings constructed and arranged to enable an asynchronous transport operation of multiple parts. For illustrative example, assume a linear stretch of the transport system of the invention comprising a pair of parallel rails mounted on parallel structural beams with idler rollers on the rails (mounted inwardly of the rails in the space defined therebetween) and separate part-transport pallets movable in a longitudinal series along such linear stretch. Assume also external stops which can selectively arrest motion of any selected ones of such pallets in order to effect machining, handling on other process operations thereon while not necessarily stopping other pallets. In the state of the art, e.g. DE-A-3 304 090, a frictional belt (or belts) in the space between the rails would normally drive the pallets and slip with respect to such pallets as are externally stopped, with resultant undue belt wear shortening service life, breakdown of drive precision and shedding of rubbed-off belt particles to produce contamination.

Citation US-A-4 530 287 discloses a transport system according to the preamble of independent claim 1. A slip clutch may be arranged between the pinions over which the chain is trained and the conveyor rollers in engagement with the lateral side faces of the pallets so that, when the pallet is stopped in a work station, no damage is done to the conveyor rollers on the lateral pallet side faces.

The repeating drive element of the present invention obviating such difficulties is a module comprising (x) a power element and (y) a pallet mover interconnected by (z) means defining a magnetic hysteresis coupling constructed and arranged to yield a constant high torque to the pallet independent of differential speed between parts (x) and (y) above. Thus when a pallet is stopped, the corresponding drive linkage member can be stopped to eliminate slip and friction with speed of (x) maintained constant or varied as desired and with slippage transferred from the mechanical realm of the magnetic realm.

The transport system provides such drive elements at a frequency to insure pallet contact control through the desired locus of controlled pallet movement and stoppage in linear stretches of the system.

The drive elements are incorporated in corner turning portions of the transport system in a variant manner that enables simplified control of turns of pallet movement by selective contacts, of separate corner-mounted elements (y) with the pallet.

The deliberate incorporation of high hysteresis material as a driven member of the magnetic coupling ensures high enough torque and a smooth (non-cogging) rotary movement.

The invention also comprises the modular transport system as a whole providing ease of assembly, disassembly and re-assembly in effective arrays for various tasks. Each array is reliably precisely aligned and stable and affords good access to workpieces carried thereby and the array components per se from several directions.

Other objects, features, and advantages of the invention will be apparent from the following detailed description of preferred embodiments thereof taken in conjunction with the accompanying drawing in which:

### BRIEF DESCRIPTION OF THE DRAWING

Fig. 1 is an isometric view of a repeating length section of a preferred embodiment of the invention;
Fig. 2 is a plan view of such length sections assembled with corner members;
Fig. 3 is an isometric view of a portion of the array of Fig. 2 with ends of four length sections meeting at a corner piece (node);
Figs. 4 and 4A are cross section view of one preferred realisation the length sections using a non-slipping drive coupling shown in cross section in Fig. 4B;
Figs. 6 and 7 are isometric views of two different preferred realisations of the corner member and Figs. 6A and 7A show certain components, respectively of the Figs. 6 and 7 items; and
Fig. 8 is a layout of a corner node in the transport path similar to Fig. 3, but in plan view and schematically indicating related control systems.

### DETAILED DESCRIPTION OF PREFERRED EMBODIMENTS

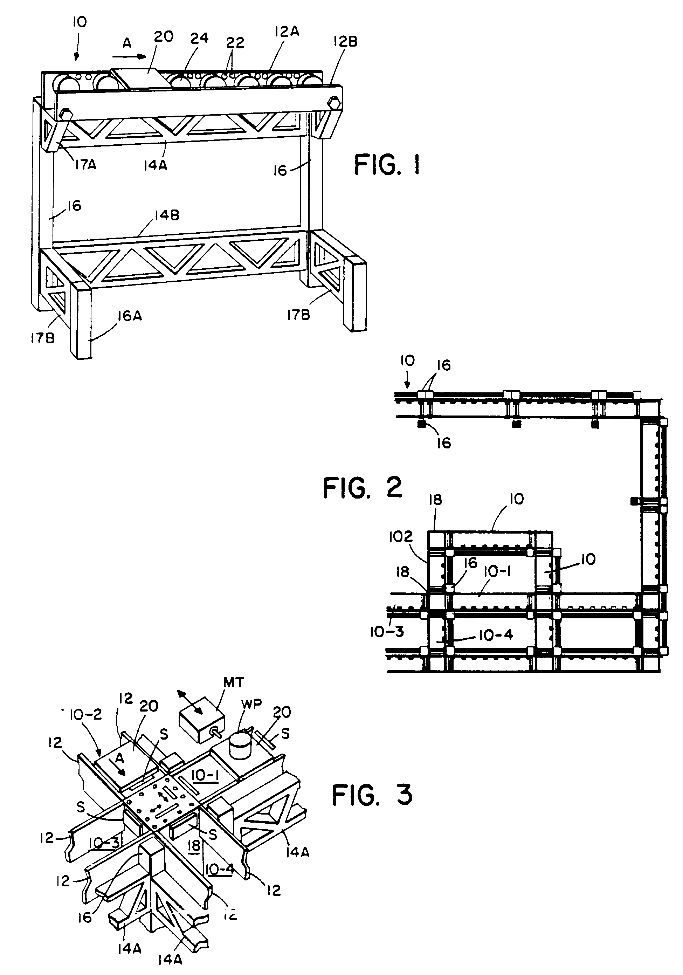

Referring now to FIGS. 1 - 3, it is seen that the transport system of a preferred embodiment of the invention comprises a linear path defining assemblage 10 for accommodating movement of workpiece (WP) carrying pallets 20 and made up of paired rails 12 one rail of each pair of opposed rails being mounted on truss form beams - indicated at 14A. Such beams are mounted on posts, e.g., as shown at 16. The assemblages 10 are mounted to define paths 10-1, 10-2, 10-3, 10-4, meeting at a corner member 18 which comprises means to selectively move a pallet 20 therein in x or y directions, forwardly or rearwardly.

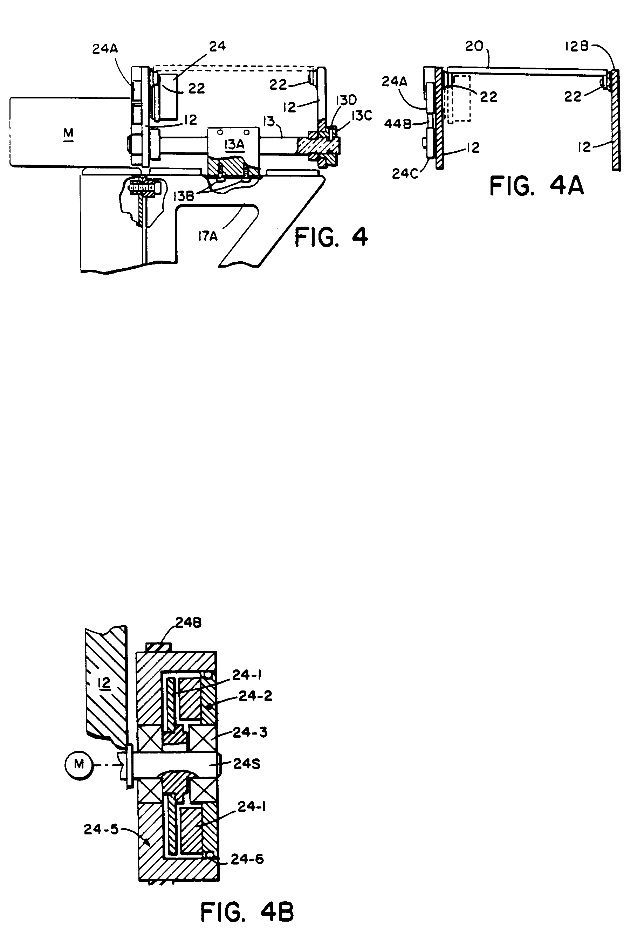

Guide wheels 22 are mounted on the inner faces of both rails 12 of each pair. In one embodiment of drive shown in FIGS. 4, 4A, 4B, drive wheels 24 are mounted on the inner faces of rails 12A, 12B, etc. The pallet(s) 20 ride easily as indicated by direction-of-movement arrow A (FIG. 1), with low friction, on freely rotating guide wheels 22 and are constrained against movement laterally by a raised flange edge 22A of each such roller. A friction boot raised edge 24B of each drive wheel 24 engages the underside of the pallet and moves it in its path.

As shown in FIGS. 1 - 2 (and in FIGS 4-4A) each section 10 preferrably has a lower beam 14B, as well as the upper beam 14A spanning the distance between spaced columns 16 for rigidity. Brackets 17A provide outrigger support to the distant rail 12 of each pair. Outrigger posts 16A tie into main posts 16 via short beams 17B.

As shown in FIGS. 1, 4, 4A, a shaft 13 mounted in a bearing box 13A (seated on bracket 17A and secured thereto by bolts 17B) ties the rails 12 together via nuts 13C, at least one of which has a transverse hole accommodating an alignment pin 13D. Collars 13E further secure the rail placements on the shafts.

As a pallet 20 containing a workpiece WP is moved past a machine tool (MT), a stop S can be selectively activated (raised) to arrest motion of the pallet by the stop by intercepting the front edge of the pallet or by intercepting the earliest pallet in a line of pallets.

### Drive Systems

The driving wheels 24 of each assemblage 10 of the FIGS 1 - 3 and 4, 4A, 4B embodiments are preferrably driven in a ganged array by a single motor M mounted in cantilever fashion from that rail 12 of each pair which is directly supported from the beam 14. Each drive wheel 24 has a shaft 24S passing through rail 12 to an ancillary wheel 24A. A drive belt FB and idler wheels 24C provide a closed loop drive system outside the rail 12 with the motor M driving one of the wheels 24/24A or a separate wheel on the closed loop drive system to provide motive power to all such wheels on the rail.

As shown in FIG. 4B, each wheel 24 comprises its shaft 24S and a drive rim 24-1, mode of ferromagnetic material, coupled thereto. A separate portion 24-2 is rotatably mounted on the shaft, via spaced bearings 24-3, and includes a magnetic disk 24-4 of pie wedge form magnetic pole pieces in an annular array mounted thereon. Sections 24-1 and 24-4 are coupled magnetically and the drive of section 24-1 (direct or via a belt) transfers high torque to section 24-2/24-4 (on the order of 0,07-3 N.m (10-400 in. oz.), typically 0,2-0,3 N.m (30-40 in. oz.) in practical CIM applications for, e.g. milling, planing, drilling and like processing of small steel workpieces), which is a substantially constant torque notwithstanding weight, force and speed variations applied to pallet 20 (and thus to section 24-2/24-4) including a full stop of pallet 20 by a stop member S. Under the latter condition, rotary motion of section 24-2/24-4 of wheel assembly 24 stops; but high torque resulting in a high linear force in the direction A is constantly applied to stablize the position of pallet 20. When stop S is released the drive acting via section 24-2/24-4 (via the friction boot 24B) applies force to the pallet underside to immediately restart motion of pallet 20.

The drive wheels' (24) sections 24-4 comprise a circumferential pie wedge array of magnetic poles with alternating North and South poles and a disk form yoke 24-5 frictionally tied to 24-2 via an O-ring 24-6 and a tight fit. The poles of 24-4 are separated by a 0,254-1,016 mm (.01-.04 inch) gap (depending on desired coupling vs. practical mechanical tolerance) form a section 24-4 which is made of a magnetizable alloy, e.g., Alnico 5 which tends to lag the magnetizing flux in flux generated and collapsed (i.e., exhibit high hysteresis) so that a constant torque can be applied at the rim of 24-4 independent of speed differential between continuously driven section 24-1 and intermittently stopped section 24-4.

Referring again to FIG. 2 it is seen that each corner member 18 is one unit (preferrably eight inches to foot) squared. The length sections 10 are integral multiples of such unit in various lengths to provide arrays fitting various needs. The pallets 20 are (1) by (1) unit squares.

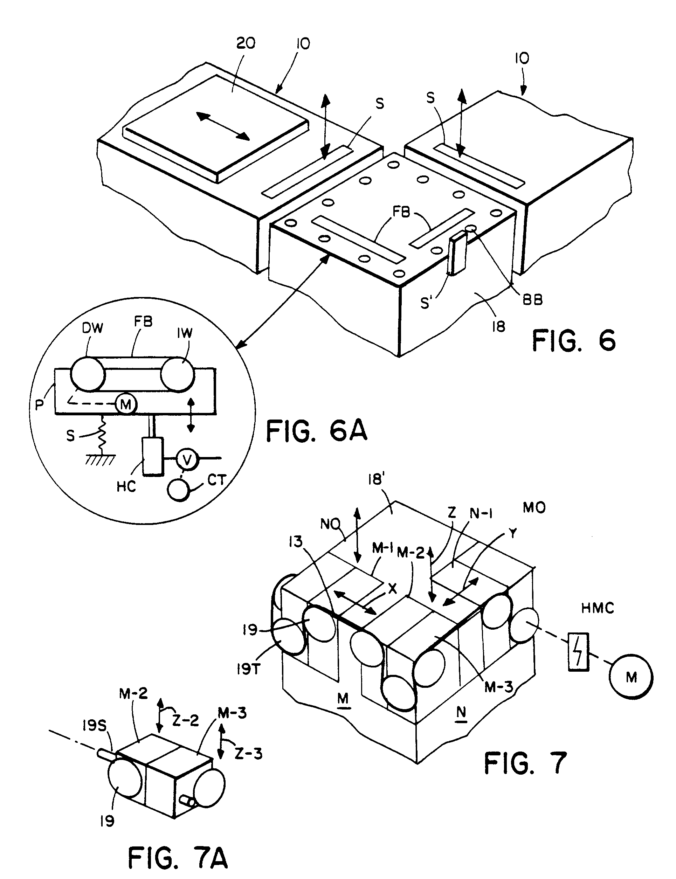

FIGS. 6, 6A, 7 show two embodiments of drive for the corner members 18 and an alternative form thereof 18'. Preferrably the corner members are constructed as shown in FIGS. 6 and 6A. Two friction belts FB with associated drive, are provided. The belts can be operated in either direction and selectively an array of ball bearings is spread around the periphery of the corner top so there is virtually no drag on a pallet on the corner to resist the engaged friction belt FB. Preferrably each belt FB of the corner member 18 and associated drive means is mounted on a plate P (FIG. 6A) which is arranged to be lowered by a hydraulic or pneumatic cylinder HC under control of a pilot valve V and controller CT. A compression spring S raises the plate (so that belt FB) engages a pallet 20 when pressure in cylinder HC is released. The reverse arrangement (the cylinder driving plate down against opposition of a tension spring) or a two way acting cylinder can be employed.

An alternative form 18' of the corner member is shown in FIG 7. Orthogonal sides M and N of corner member 18' have high pallet driving wheels 19 and related idler wheels 19I which have a single drive belt 23 spanning around the corner member. A motor M is connected (via a hysteresis magnetic coupling HMC, essentially similar to the wheel assemblies 24 of the length sections) to one of wheels 19 which (via belt 23) drives the others. Each wheel 19 is mounted on one of sections M-1, M-2, M-3, N-1 and similar sections (not shown on the remainder of the periphery. These sections are movable along arrow Z via linear (or arcuate, which over a short length is like linear) movement under control of a drive (similar to the drive of the plates P in FIG. 6A). When sections M-1, M-2 are raised their wheels 19 can drive a pallet along the path. When sections M-3 and N-1 are raised their wheels 19 can drive the pallet 20 along the path (II). Thus a simple, inexpensive and fast-response control is provided for cornering.

FIG. 7A shows how two adjacent sections, e.g., M-2, M-3, can be placed on a common shaft 19S and driven separately about said shaft by separate rotory or linear actuators (not shown) to pivot the respective section by a few degrees of arc (Z-2 or Z-3) to create the necessary movement for engaging its respective drive wheel 19 with the pellet 20.

The stops S (FIGS. 3 and 6) can be driven in the manner shown in FIG. 6A and discussed above for driving plate P. Where a length section 10 or corner 18 (or 18') has an open end not leading to another section with a movable stop, a fixed stop can be provided as shown at S' in FIG. 6.

All of the movable stops S, the corner drive engaging mechanisms of the embodiments of FIGS. 6 - 7 and the linear drive mechanisms of the embodiments of FIGA. 4-4B, as well as the drive motors per se are low inertia, quickly responsive drive means effecting single direction transport to a pellet 20 at any given time to enable such pallet, whether unloaded or loaded to move rapidly as single or in files, to be stopped abruptly as singles or in files without jumping the rails or shingling onto each other. Precision control can be applied to reliably account for every pellet's location under computer control. The matrix array of linear sections and corners can be applied in a variety of combinations from a limited range of modular lengths of sections 10 and related beams, brackets and posts consistent with the reliable location of pallets because of the fixed relationship of dimensions of these various parts. The variety of range is enhanced for simplicity by the single supporting beam 14A associated with each pair of rails 12 in a linear section 10.

The essentially frictionless drive of FIGS. 4, 4A, 4B can be used in factory areas where low shedding is a significant requirement and the frictional importance. The friction and slipping of drive of corners 18 in FIGS. 6 and 6A and associated shedding is usually negligible even in clean room situations; but the non-slip alternative of FIG. 7 can be used if necessary.

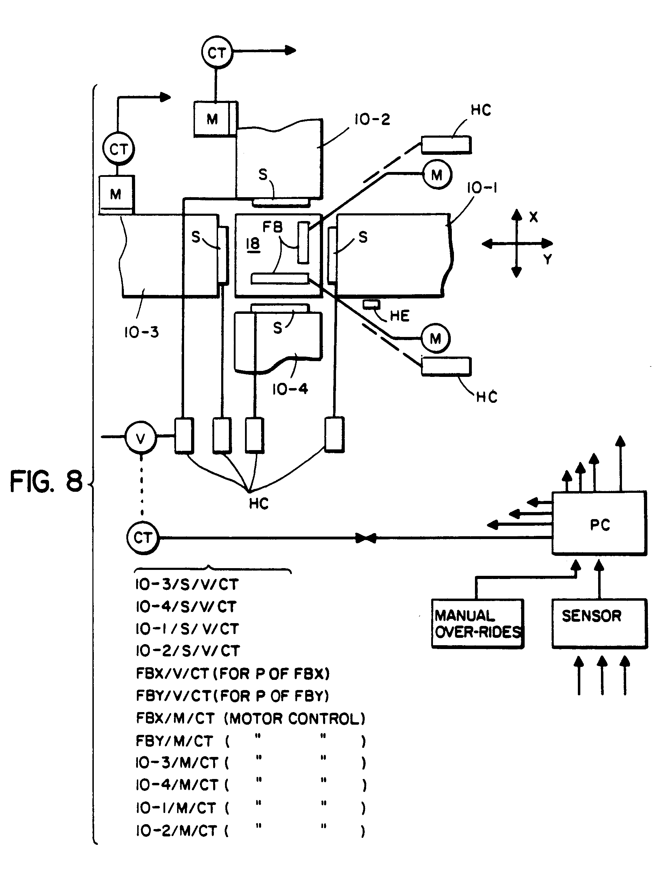

FIG. 8 illustrates the integration of the mechanical features shown in FIGS. 1 - 7 with programmed controls. As shown above, a typical corner 18 can be a node at the x-y intersection, joining typical length sections 10-1, 10-2, 10-3, 10-4, each of which has a movable hard stop S at its end. Each such stop has a movable plate P driven by a hydraulic cylinder HC under control of a pilot valve V and controller CT. The corner 18 has (in the FIG. 6, 6A embodiment thereof) driving friction belts FB, each of which has a drive motor and a lift plate under control of a cylinder, pilot valve and valve controller.

Each of the drive motors (M) for length sections 10-1, 10-2, 10-3, 10-4 has a controller CT. As shown in the table at the foot of FIG. 8, the contolling inputs can be provided to turn on/off the respective stop-pilot valve controllers for the stops shown in FIG. 8 at the ends of length sections 10-1. 10-4; for similar valve controllers (V/CT) of friction belts FBX and FBY; for the drive motor controls of FBX and FBY and for drive motor controls of sections 10-1...10-4. These inputs are provided by a programmable controller device PC pursuant to a stored program and under further control of manual over-ride means and sensor read-outs. An example of one of many sensors which can be applied to the transport path array is indicated at HE - a Hall Effect sensor to detect pallet motion at the end of section 10-1. Other sensors can include limit switches and other mechanical means, optical means, magnetic means, electromagnetic means.

Communication can be provided from PC and/or the sensor readout panel to a remote computer and/or display and/or recorder.

These controls may be integrated with controls of machining or other work piece handling (see FIG. 3) apart from transport per se.

The integration of these advanced levels of controllability indicated above is enabled by the reliability of the transport system disclosed in FIGS. 1 - 7 and related text above.

## Claims

1. Transport system for programmed transport for machining, assembly and the like of workpieces or the like, comprising, in combination,
(a) means (12) defining at least one transport path for movement of the parts and including means (S) to selectively stop motion of the parts wherein the transport path comprises two spaced opposing rails constructed and arranged for even distribution of workpiece weight to the two rails,
(b) support means (20) for supporting workpiece parts (WP) in said path and constructed and arranged for movement along said path
(c) drive means (24) for moving said support means and continuously applying driving torque thereto whether said support means (20) are moving or stopped by said means (S), wherein the torque application is made during stops, characterised in that said drive means (24) comprises
non-slipping, non-shedding drive means (24) defining a motive power section (24-1) and a support section (24B) and a hysteresis magnetic coupling (24-1, 24-4) therebetween, and idler means (22) mounted on both rails for guiding said support means (20).

2. Transport system in accordance with claim 1, wherein said drive means (c) comprise a plurality of wheel assemblies, each having a first powered section and a second section magnetically coupled to the first section.

3. Transport system in accordance with claim 2, wherein said second section has means for frictionally driving said support means (20).

4. Transport system in accordance with claim 1 characterised in that said means (12) comprise a plurality of pre-formed distinct length sections having a substantially common width to all such sections and further comprise at least one corner section of square form based on said common width, wherein said length sections are pre-formed modules, each comprising at least one elongated structural stiffness element spanning the required length and carrying said drive means thereon.

5. Transport system in accordance with claim 4, wherein pairs of parallel, elongated, structural elements are provided each carrying opposed drive means.

6. Transport system in accordance with claim 4, wherein drive means are mounted on at least two orthogonally related sides of said corner member.

7. Transport system in accordance with claim 4 and further comprising means for selectively engaging the drive means of one or the other of the sides of a corner member with support means thereon.

8. Transport system in accordance with any one of claims 1 to 7, wherein:
said means (12) comprise means defining multiple linear drive sections in an orthogonal array, means defining nodes at the junctions of orthogonally intersecting linear drive elements, said means (20) comprise pallet means for carrying loads on the liner drive sections and nodes,
the linear drive sections, nodes and pallets having a common width, the pallet being square and the linear sections; length being integral multiples of width,
and said drive means (24) comprise reversible drive means associated with each linear section for driving the pallets along the length thereof in a single dimension, reversible, two dimension drive means associated with said node means for driving the pallets on and off the nodes in selected ones of orthogonally intersecting directions, and comprising two continuously running drives and means for selectively reversing drive direction and means for selectively engaging the drives with a pallet at the node, and further comprising
(d) movable gate means associated with each node to limit pallet movement to and from the node and means for driving said gate means, and
(e) control means for accepting scheduling commands and implementing the same by activating node drives and gates and engagement thereof with pallets on the system to implement the scheduling commands.

9. Transport system in accordance with claim 8, wherein the linear drive sections' drive means comprise non-slipping essentially non-shedding drive means.

10. Transport system in accordance with claim 8, wherein each linear section is constructed and arranged to automatically drive each pallet thereon continuously along the length thereof until a stop is encountered by the driven pallet or the linear sections' drive as a whole is stopped and each linear section drive means comprises a single prime mover.

## Patentansprüche

1. Fördersystem für die programmierte Förderung von Werkstücken oder dergleichen zum Zweck der Bearbeitung, der Montage oder dergleichen, gekennzeichnet durch die Kombination der folgenden Merkmale:
a) Mittel (12), durch die zumindest ein Förderweg für die zu bewegenden Teile gebildet wird einschließlich Mittel (S), um die Bewegung der Teile wahlweise anzuhalten, wobei der Förderweg aus mit Abstand voneinander angeordneten, einander gegenüberliegenden Schienen besteht, die mit Hinblick auf eine gleichförmige Verteilung des Werkstückgewichts auf die beiden Schienen gestaltet und angeordnet sind,
b) Unterstützungsmittel (20) zum Auflagern der in dem genannten Förderweg befindlichen Werkstückteile (WP), welche Unterstützungsmittel zur Bewegung entlang des Förderweges gestaltet und angeordnet sind,
c) Antriebsmittel (24), die zur Bewegung der genannten Unterstützungsmittel bestimmt sind und auf diese kontinuierlich ein Drehmoment übertragen, und zwar sowohl im Bewegungszustand als auch dann, wenn diese mittels des Mittels (S) angehalten werden, wobei die Drehmomentübertragung während des Anhaltens bewirkt wird,
dadurch gekennzeichnet, daß die genannten Antriebsmittel (24) aus
nicht gleitfähigen, keine Partikelablösung bewirkenden Antriebsmitteln (24) bestehen, die aus einem Antriebskraftabschnitt (24-1) und einem Stützabschnitt (24B) und einer zwischen diesen Abschnitten angeordneten, nach dem Prinzip der magnetischen Hysterese arbeitenden Kupplung (24-1, 24-4) und Laufrollen (22) bestehen, die auf beiden Schienen zur Führung der Unterstützungsmittel (20) angeordnet sind.

2. Fördersystem nach Anspruch 1, wobei die genannten Antriebsmittel (24) aus einer Vielzahl von Radbaugruppen bestehen, deren jede aus einem ersten Antriebsabschnitt und einem zweiten, mit dem ersten Abschnitt magnetisch gekuppelten Abschnitt besteht.

3. Fördersystem nach Anspruch 2, wobei der zweite Abschnitt mit Mitteln zum reibschlüssigen Antrieb der genannten Unterstützungsmittel (20) versehen ist.

4. Fördersystem nach Anspruch 1, dadurch gekennzeichnet, daß die genannten Mittel (12) aus einer Vielzahl vorgeformter einzelner Längenabschnitte bestehen, welche Abschnitte eine im wesentlichen gemeinsame Breite aufweisen und darüber hinaus zumindest einen, eine quadratische, auf die gemeinsame Breite ausgerichteten Eckenabschnitt aufweisen, wobei die genannten Längenabschnitte vorgeformte Module sind, deren jeder zumindest aus einem, sich in Längsrichtung erstreckenden, gestaltfasten, die erforderliche Länge überbrückendan Bauteil besteht, welches die genannten Antriebsmittel trägt.

5. Fördersystem nach Anspruch 4, wobei Paare zueinander paralleler, sich in Längsrichtung erstreckender Bauteile vorgesehen sind, die einander gegenüberliegende Antriebsmittel tragen.

6. Fördersystem nach Anspruch 4, wobei die Antriebsmittel an wenigstens zwei, zueinander orthogonalen Seiten des Eckenabschnitts angeordnet sind.

7. Fördersystem nach Anspruch 4, welches weiterhin mit Mitteln zum wahlweisen Aufschalten der Antriebsmittel der einen oder anderen Seite des Eckenabschnitts auf das auf letzterem befindliche Unterstützungsmittel versehen ist.

8. Fördersystem nach einem der vorangegangenen Ansprüche 1 bis 7, wobei die Mittel (12) solche Mittel umfassen,
welche in orthogonaler Anordnung aus einer Vielzahl geradliniger Verfahrabschnitte bestehen und Mittel welche an den Verbindungen der einander orthogonal schneidenden geradlinigen Verfahrabschnitte Knotenpunkte bilden, wobei die genannten Mittel (20) durch Schlitten gebildet werden, die auf den geradlinigen Verfahrabschnitten und Knotenpunkten zum Tragen von Lasten bestimmt sind,
wobei die geradlinigen Verfahrabschnitte, die Knotenpunkte und die Schlitten eine gemeinsame Breite aufweisen, wobei die Schlitten quadratisch ausgebildet sind und die Längen der geradlinigen Verfahrabschnitte als ganzzahlige Vielfache der Breiten bemessen sind und
wobei die Antriebsmittel (24) als umkehrbare, mit einem geradlinigen Abschnitt zum Antrieb der Schlitten über die Länge dieses Abschnitts, somit in einer Dimension wirksame Abtriebesmittel und als umkehrbere, in zwei Dimensionen wirksame Antriebsmittel ausgestaltet sind, die an den Knotenpunkten angebracht sind, um einen Schlitten entsprechend einer der ausgewählten, einander orthogonal schneidenden Richtungen auf einen Knotenpunkt zu bzw. von einem Knotenpunkt fort zu verfahren, welche Antriebsmittel aus zwei kontinuierlich betriebenen Antrieben, Mitteln zum wahlweisen Umkehren der Antriebsrichtung und Mitteln zum wahlweisen Aufschalten der Antriebe auf einen, in einem Knotenpunkt befindlichen Schlitten bestehen, wobei das Fördersystem darüber hinaus aus
d) bewegbaren, die Schlittenbewegung zu dem Knotenpunkt hin bzw. von diesem fort begrenzende Schranken sowie Mitteln zum Antrieb der Schranken und aus
e) Steuermitteln zum Empfang von Programmbefehlen sowie zum Ausführen derselben, indem die Antriebe der Knotenpunkte sowie der Schranken eingeschaltet und mit den, auf dem Fördersystem befindlichen Schlitten zwecks Ausführung der Programmbefehle in Eingriff gebracht werden, besteht.

9. Fördersystem nach Anspruch 8, wobei die den geradlinigen Verfahrabschnitten zugeordneten Antriebsmittel nicht gleitfähige, im wesentlichen durch keine Partikelablösung charakterisierte Antriebsmittel umfassen.

10. Fördersystem nach Anspruch 8, wobei jeder geradlinige Abschnitt dahingehend ausgestaltet und angeordnet ist, daß der auf diesem befindliche Schlitten automatisch und kontinuierlich über die Länge dieses Abschnitts angetrieben wird, bis der angetriebene Schlitten auf einen Haltepunkt stößt oder daß der Antrieb des geradlinigen Abschnitts insgesamt abgeschaltet wird und daß die Antriebsmittel eines jeden geradlinigen Abschnitts eine einzige Antriebsmaschine aufweisen.

## Revendications

1. Système de transport pour le transport programmé en vue de l'usinage, de l'assemblage et analogue de pièces de travail ou analogues comportant, en combinaison,
(a) des moyens (12) définissant au moins un trajet de transport pour le déplacement des pièces et comportant des moyens (S) pour arrêter sélectivement le mouvement des pièces, le trajet de transport comportant deux rails espacés en regard construits et agencés pour une distribution régulière du poids des pièces de travail sur les deux rails,
(b) des moyens de support (20) pour supporter les pièces de travail (WP) dans ledit trajet, et construits et agencés pour se déplacer le long dudit trajet,
(c) des moyens d'entraînement (24) pour déplacer lesdits moyens de support et leur appliquer en continu un couple d'entraînement, que lesdits moyens de support (20) soient en mouvement ou arrêtés par lesdits moyens (S), l'application du couple étant effectuée pendant les arrêts, caractérisé en ce que lesdits moyens d'entraînement (24) comportent des moyens d'entraînement (24) sans glissement et sans pertes définissant une partie motrice (24-1), une partie de support (24B) et un couplage magnétique (24-1, 24-4) à hystérésis entre celles-ci, et des moyens fous (22) montés sur les deux rails pour guider lesdits moyens de support (20).

2. Système de transport selon la revendication 1, dans lequel lesdits moyens d'entraînement (c) comportent une pluralité d'ensembles à roues dont chacun présente une première partie motrice et une seconde partie coupée magnétiquement à la première partie.

3. Système de transport selon la revendication 2, dans lequel ladite seconde partie comporte des moyens pour entraîner par friction lesdits moyens de support (20).

4. Système de transport selon la revendication 1, caractérisé en ce que lesdits moyens (12) comportent une pluralité de sections de longueurs distinctes préformées présentant une largeur essentiellement commune à toutes ces sections, et présentent au surplus au moins une section d'angle de forme carrée basée sur ladite largeur commune, lesdites sections de longueurs étant des modules préformés dont chacun comporte au moins un élément structurel allongé de raideur s'étendant sur la longueur requise et portant sur lui lesdits moyens d'entraînement.

5. Système de transport selon la revendication 4, dans lequel des paires d'éléments structures allongés parallèles sont prévues et portent chacune des moyens d'entraînement opposés.

6. Système de transport selon la revendication 4, dans lequel les moyens d'entraînement sont montés sur au moins deux côtés orthogonaux dudit élément d'angle.

7. Système de transport selon la revendication 4, comportant en outre des moyens pour faire coopérer sélectivement les moyens d'entraînement de l'un ou l'autre des côtés d'un élément d'angle avec les moyens de support montés sur celui-ci.

8. Système de transport selon l'une quelconque des revendications 1 à 7, dans lequel;
lesdits moyens (12) comportent des moyens définissant des sections linéaires d'entraînement multiples dans une rangée orthogonale, des moyens définissant des noeuds à la jonction des éléments linéaires d'entraînement se coupant à angle droit, lesdits moyens (20) comportent des moyens à palettes pour porter les charges sur les sections linéaires d'entraînement et les noeuds,
les sections linéaires d'entraînement, les noeuds et les palettes présentant une largeur commune, les palettes étant carrées et les longueurs des sections linéaires étant des multiples entiers de la largeur, et
lesdits moyens d'entraînement (24) comportent des moyens réversibles d'entraînement associés à chaque section linéaire pour entraîner les palettes sur la longueur de celle-ci suivant une dimension unique, des moyens réversibles d'entraînement suivant deux dimensions associés avec lesdits moyens à noeud pour entraîner les palettes sur les noeuds ou à partir de ceux-ci dans l'une sélectionnée de directions à angle droit, et comportant deux entraînements circulant en continu et des moyens pour inverser sélectivement la direction d'entraînement et des moyens pour faire coopérer sélectivement les entraînements avec une palette sur un noeud, et comportant en outre,
(d) des moyens mobiles à porte associés à chaque noeud pour limiter le déplacement des palettes sur le noeud ou à partir de celui-ci et des moyens pour commander lesdits moyens à porte, et
(e) des moyens de commande pour accepter des commandes programmées et exécuter celles-ci par activation des entraînements noeuds et des portes et par la coopération de ceux-ci avec les palettes du système pour exécuter les commandes programmées.

9. Système de transport selon la revendication 8, dans lequel lesdits moyens d'entraînement des sections linéaires d'entraînement comportent des moyens d'entraînement sans glissement et essentiellement sans pertes.

10. Système de transport selon la revendication 8, dans lequel chaque section linéaire est construite et agencée pour entraîner automatiquement chaque palette placée sur celle-ci en continu sur sa longueur jusqu'à ce qu'une butée soit rencontrée par la palette entraînée ou jusqu'à ce que l'entraînement de la section linéaire, comme un ensemble, soit arrêté, et les moyens d'entraînement de chaque section linéaire comportent un organe primaire d'entraînement unique.
